# EUROPEAN PATENT SPECIFICATION

(11) **EP 2 948 367 B1**
(45) Date of publication and mention of the grant of the patent: **01.08.2018**
(21) Application number: 13872992.6
(22) Date of filing: 24.01.2013
(51) Int. Cl.: B64C 1/12, B32B 3/30, B32B 3/18, B32B 15/08, B29C 70/68, B32B 27/04, B32B 27/18, B32B 15/18

(54) **AN AERIAL SKIN ARTICLE WITH REINFORCED FASTENING HOLES**
VERBUNDBESCHICHTUNGSARTIKEL MIT VERSTÄRKTEN BEFESTIGUNGSLÖCHERN
ARTICLE DE REVÊTEMENT AÉRIEN AVEC TROUS DE FIXATION RENFORCÉS

(43) Date of publication of application: 02.12.2015
(73) Proprietor: Saab AB, 581 88 Linköping (SE)
(72) Inventor: LARSSON, Anders, S-589 37 Linköping (SE); PETERSSON, Mikael, S-589 51 Linköping (SE); LUNDBERG, Anders, S-590 49 Vikingstad (SE); NYMAN, Tonny, S-587 29 Linköping (SE); HALLSTRÖM, Stefan, S-136 69 Vendelsö (SE)
(74) Representative: Zacco Sweden AB
(86) International application number: PCT/SE2013/050053
(87) International publication number: WO 2014/116151

(56) References cited:
- EP-A1- 0 496 550
- WO-A1-00/56541
- WO-A1-2004/071761
- US-A- 3 321 019
- US-A- 5 723 849
- US-A1- 2012 045 606
- US-A1- 2013 075 526
- KOLESNIKOV ET AL: "CFRP/titanium hybrid material for improving composite bolted joints", COMPOSITE STRUCTURES, ELSEVIER SCIENCE LTD, GB, vol. 83, no. 4, 8 February 2008 (2008-02-08), pages 368-380, XP022473355, ISSN: 0263-8223, DOI: 10.1016/J.COMPSTRUCT.2007.05.010
- KOLESNIKOV B. ET AL.: 'CFRP/titanium hybrid material for improving composite bolted joints' COMPOSITES STRUCTURES vol. 83, no. 4, 08 February 2008, pages 368 - 380, XP022473355 DOI: 10.1016/J.COMPSTRUCT.2007.05.010

## Description

### TECHNICAL FIELD

The present invention relates to a composite laminate skin according to the preamble of claim 1. It also relates to a method for producing the laminate skin according to claim 9.

The invention relates to the aircraft industry, aircraft and manufacture of aircraft or other aerial vehicles. However, the invention is not limited thereto.

### BACKGROUND ART

There are current reinforcement technologies for aircraft (or other aerial vehicles) composite skins, especially regarding the portions of the skin which surround fastening apertures in the skin for fastening the skin to a sub-structure, such as ribs, rib feet, stringers etc. by means of fasteners, such as bolts, rivets etc. These technologies make use of a rather thick plastic laminate skin for compensating the high stress present within said portions. Such addition of extra fiber reinforced plastic material to the skin's aperture surrounding portions will generate high weight. The thicker laminate is heavy per se and the laminate is often made thinner in areas (i.e. areas not having any fastening apertures) between said portions. This implies that shims might have to be applied between skin underside and substructure for achieving a smooth and even aerodynamic surface of the skin outer side. For taking up clamp forces in edge areas surrounding the fastening apertures, which forces are provided by stressed fasteners (such as bolts) during flight, and preventing the fastener to crack or negatively affect the fastener aperture surrounding portions, the laminate skin of the aircraft must be reinforced. At the same time, the aircraft and the laminate skin must exhibit as low weight as possible.

The document CFRP/titanium hybrid material for improving composite bolted joints; Composite structures; Kolesnikov et al; Elsevier Science LTD, GB, vol. 83, No. 4, 8 February 2008 (2008-02-08), pages 368-380, XP022473355, ISSN: 0263-8223, DOl: 10. 1016/J.COMPSTRUCT.2007.05.010, discloses a composite bolted joint reinforced by metal layers embedded between composite layers for improving the coupling efficiency of the joint. The bolted joint is reinforced by a "lamella coupling" through which the bolts extend.

There is a need for an improved aerial vehicle composite laminate skin, which can be produced cost-effective.

There is a need to further increase the strength properties within said portions surrounding the fastening apertures. During use, aircraft are subject for intense temperature changes, freeze and thaw cycles. The composite laminate skins of wings, leading edges, fuselages etc., are subjected to extreme condensation, wherein water condenses within the composite. Also moisture diffuses into the composite. There is thus a need for a long-life laminate skin exhibiting strength properties over long time.

A design of laminate skins being disclosed in US 4 029 838 describes composite laminate structures of metal sheets and various kinds of fibres. A further design of laminate skins is disclosed in US 4 500 589, describing a laminate of aluminium-containing metal sheets and threads-adhesive layers. The skin disclosed in US 4 500 589 being made for improved load bearing and weight saving for saving fuel.

There is a need to develop prior art techniques, as aircraft more frequently comprise composite laminate skins.

There is also a need for providing a cost-efficient way to produce low-weight composite laminate skins, having thin and constant thickness, wherein the skins still can be fastened to a sub-structure under the skin, achieving high strength in the laminate around aperture edges.

There is also a need to provide a cost-effective way to select, in a flexible manner, the strength modulus in the laminate around the aperture edges and thus determine and produce the necessary thickness of the laminate skin so that weight can be saved.

There is thus an object to provide a composite laminate skin, comprising improved reinforced portions surrounding the fastening apertures (comprising e.g. bolts holding the skin and sub-structure together), which skin is of low weight, exhibits constant thickness at positions for fastening to sub-structure, and which also at the same time will provide strength over long time. It should not delaminate due to moisture and corrosion.

There is an object to provide a laminate skin which is capable to take up large axial clamp forces generated by the fastening element due to influence of different forces on the skin and structure during flight.

There is an object to provide a cost-effective method to manufacture the improved skin.

There is an object to improve prior art techniques.

### SUMMARY OF THE INVENTION

This has been achieved by the composite laminate skin defined in the introduction and being characterized by the features of the characterizing part of claim 1.

In such way is achieved that the laminate skin comprises a plurality of reinforced portions each surrounding the respective fastening aperture, wherein each reinforced portion is adapted to be in contact with a skin holding sub-structure and the fastening elements (e.g. bolts) thereby provide a rigid bond between the skin and the skin holding sub-structure. There is no need to add additional fiber reinforcement plastic material to the portions surrounding the aperture, since the strength around the aperture edge will be sufficiently high by means of the metal inserts. Thus, the laminate skin does not need to be thicker in areas surrounding the fastening aperture.

Thereby is achieved that the composite laminate skin can be made with an even thickness and no shims have to be arranged in between two adjacent fastening apertures of the skin and under the skin for connecting the skin under side and the skin holding sub-structure. By the achievement of providing a thinner laminate skin than prior art skins while exhibiting the same strength in fastening positions, weight is also saved. As an aircraft comprises a large number of airfoil laminate skins to be fastened to the sub-structures and the number of fastening apertures thus is high, the total weight of an aircraft can be reduced, still achieving the same strength of the bonds between laminate skins and sub-structures.

Thereby is achieved that the inserts, being arranged in the stack (wherein the stack is tailored with a specific shape, e.g. serrated, stepped, hour glass shaped, lens shaped etc.), due to their mutual positions relative each other, will provide the stack with a lateral outer surface area in an optimal way in the laminate. I.e. the lateral outer surface of the stack has been displaced in a direction radial outward in comparison with prior art fastening elements, which exhibit lateral surfaces corresponding with bore dimension of the apertures.

Thereby is achieved that the inserts, being arranged in the stack, together will exhibit and serve as a massive metal collar, wherein each stack is capable to take up large axial clamp forces generated by the fastening element due to influence of different forces on the skin and structure during flight.

In such way is achieved that the apertures can be provided closer to the edge of the laminate skin. This is reached by the reinforced areas surrounding the apertures. By providing the fastening apertures close to the skin edge, flanges of the sub-structure can be designed more narrow as the fastening elements (i.e. bolts) extending from the flanges can be positioned more closely to each other (bolt beside bolt or bolt row beside bolt row).

Preferably, the inserts comprise stain-less steel or some other metal or metal alloy.

Preferably, the inserts are thin plates of rolled stainless steel (taking up high yield stress) arranged in said stack. The thickness of each plate could be 0, 08 mm to 0,15 mm or other dimensions.

In such way is achieved that the laminate skin over long time will provide strength properties for safe connection of the skin to the skin holding sub-structure. The use of stain-less steel provides that no corrosion appears within the laminate skin. The use of aperture edge reinforcement stain-less steel inserts embedded in the laminate skin within the portions surrounding the fastening apertures implies that the laminate skin can be made thinner within said portions than a current laminate skin. It has been shown by experiments by the applicant that it is efficient to machine (drilling, orbital drilling etc.) the fastening apertures through the inserts without leaving any formation of cutting in between the laminate plies.

Suitably, the inserts are made of anti corrosive steel alloy or aluminum (-magnesium) alloys or titanium or other non-corrosive metal or/and with anti corrosive surface treatment. The inserts may be adhered to each other by means of adhesive paste or non-corrosive adhesive sealant paste and/or anti-corrosive primer.

Preferably, the inserts are made of ceramic material. Suitable, the inserts comprises nano reinforcement elements, such as carbon nano tubes CNTs, etc.

Alternatively, the insert is designed as a thick "puck" having at least one through bore. The "puck" is embedded in the laminate and serves as a reinforcement displacing the stress from the through bore edge to the periphery (envelope surface) of the "puck". The "puck" preferably comprises a composite material including a plastic with reinforcing fiber material. The reinforcing fiber material may have different orientations in different positions of the "puck" for matching the strength properties of the surrounding laminate. The "puck" may have protrusions for engaging the laminate plies.

Suitably, the fastening aperture extends through a pre-determined number of inserts, which number corresponds with the number of fiber reinforcement plastic plies stacked onto each other.

Thereby is achieved a highly strengthened connection between an aircraft laminate skin and a skin holding sub-structure.

Preferably, the fastening aperture extends through a pre-determined number of inserts, each of which exhibits an extension in said plane so that the peripheral edges of the inserts form a serrated interface, defining an engaging zone between the stack of plies and the stack of inserts.

Suitably, the every second aperture edge reinforcement insert of a stack providing the reinforced fastening aperture exhibits a smaller extension than the extension of intermediate inserts between said every second insert. By arranging the inserts so that a toothed interface is achieved by means of the edge peripheries of the inserts stacked onto each other, an interface between plastic and metal will have an optimal lateral outer surface area decreasing the clamp forces in the laminate. I.e. the lateral outer surface of the stack has been displaced in a direction radial outward.

Preferably, the fastening aperture extends through a pre-determined number of inserts, each of which exhibits an extension in said plane so that peripheral edges of the inserts together form a stepped interface, defining an engaging zone between the stack of plies and the stack of inserts.

Suitably, the stack is lens shaped.

Preferably, the stack is hour glass shaped.

In such way is achieved that anchorage of the stack of inserts in the laminate is made, wherein fiber reinforced plastic plies protrude into steps and/or onto inclining contact surfaces of the stack, thus increasing the strength of the aperture edges.

Suitably, the insert is thinner than the thickness of the fiber reinforcement plastic ply into which the insert is inserted.

Thereby is provided that an adhesive can be added to the contact surfaces (insert faces) for providing a high strength of the aperture without the need of making the laminate thicker within the area of the aperture.

Alternatively, the insert is thicker than the thickness of the fiber reinforced plastic ply into which the insert is inserted so that the insert extends through more than two plies.

In such way is achieved a compact insert extending through the laminate, crosswise the plies. Such embodiment will promote a cost effective production (less parts, could be just two inserts forming the stack) at the same time as the compact insert provides high resistance against stress.

Preferably, adjacent inserts, and face to face arranged inserts, are bond together via their respective contact surface facing each other.

Suitably, the insert does not exhibit any sharp corners but exhibits a curved periphery.

In such way is achieved that each recess made in the fiber reinforced plastic plies will not have any sharp angles or corners (seen in a direction towards the plane of the laminate skin) as the recess wall follows the curved periphery of the fastening aperture edge reinforcement insert.

This has also been solved by the features claimed by the method claim 9.

Thereby is achieved a method which efficiently can be used in the production of composite laminate skins comprising a plurality of fastening apertures, each comprising a reinforced aperture edge portion surrounding the respective fastening aperture.

In such way is achieved an effective production of composite laminate skins, having a plurality of reinforced fastening apertures, each of which being adapted for encompassing a respective fastening element. The strength of each fastening position especially promotes that the aircraft skin can be made thinner, which saves weight and potentially reduces drag and thereby fuel during flight.

Suitably, each aperture edge reinforcement insert being somewhat smaller in peripheral dimension (seen in a direction toward said plane) and thinner (seen from side) than the mating recess of the ply.

Preferably, the step of providing the plies with a plurality of recesses is made by cutting.

Suitably, the step of providing the plies with a plurality of recesses is made by punching.

In such way is achieved that the production can be made by means of automatic means (robot apparatus) which is cost-effective.

Preferably, the step applying inserts into the recesses is also performed by a robot and also the step of providing inserts is made by punching a metal plate by means of a robot.

Since the uncured or semi-cured plies, having the plurality of recesses, each having a periphery greater than the periphery of a mating insert, are cut with recesses before curing and gaps are present between the periphery of inserts and the periphery of recesses, a snug fit between insert and ply will be due after curing and pressurizing of the lay-up.

It has been shown by experiments by the applicant that a cost-effective machining of the fastening apertures through the stack of inserts is guaranteed without leaving any formation of cutting in between the laminate plies or inserts. This is made by the massive stack exhibiting at least two inserts.

Preferably, the step of providing the ply comprising a plurality of recesses is followed by insertion of the inserts into the recesses before a second ply is applied onto said ply.

This involves a cost-effective production of an aircraft composite laminate skin, which exhibits high strength within skin areas comprising fastening apertures for fastening the skin to sub-structures, such as ribs, stringers, beams, rib feet, etc.

Suitably, the step of applying the plies onto each other is repeated n times, wherein n being the number of plies stacked onto each other for providing the composite laminate skin.

Preferably, the step of applying the plies (comprising the inserts) onto each other is repeated n-1 times. It means that the finished laminate skin comprises one ply (e.g. pre-preg ply) without any insert plates.

Suitably, the step of applying the plies (comprising the inserts) onto each other is repeated n/2 times. This means that a laminate skin (e.g. wing skin) may comprise fasteners just anchored half way through the laminate thickness. This promotes laminar airflow, since the outer surface, or aerodynamic surface, will be smooth without any fasteners.

Preferably, the step of providing the plies with a plurality of recesses is made by cutting or by punching.

Preferably, the step of applying inserts into the recesses is performed by a robot and the step of providing inserts is made by punching a metal plate by means of a robot.

### BRIEF DESCRIPTION OF THE DRAWINGS

The present invention will now be described by way of examples with references to the accompanying schematic drawings, of which:
Fig. 1 illustrates an aircraft comprising a composite laminate skin;
Fig. 2 illustrates a cross section of an airfoil according to prior art;
Fig. 3a illustrates a cross-section of a laminate skin according to a first embodiment;
Fig. 3b illustrates a cross-section of a wing skin section according to a second embodiment;
Fig. 3c illustrates a cross-section of a wing skin section according to a third embodiment;
Fig. 3d illustrates a cross-section of a wing skin section according to a fourth embodiment;
Fig. 3e illustrates a cross-section of a fuselage skin section according to a fifth embodiment;
Fig. 3f illustrates a cross-section of a skin section according to a sixth embodiment;
Fig. 4a - 4g illustrate different shapes and contours of inserts;
Fig. 5 illustrates in a perspective view a set of stacks according to a seventh embodiment;
Fig. 6 illustrates a perspective view of a lay-up of plies with inserts;
Fig. 7 illustrates a method for producing the composite laminate skin; and
Fig. 8 illustrates a cross-section of a laminate skin comprising a divided insert promoting the achievement of a pre-determined measure defined from aerodynamic surface to a reference plane.

### DETAILED DESCRIPTION

Hereinafter, embodiments of the present invention will be described in detail with reference to the accompanying drawings, wherein for the sake of clarity and understanding of the invention, some details of no importance are deleted from the drawings.

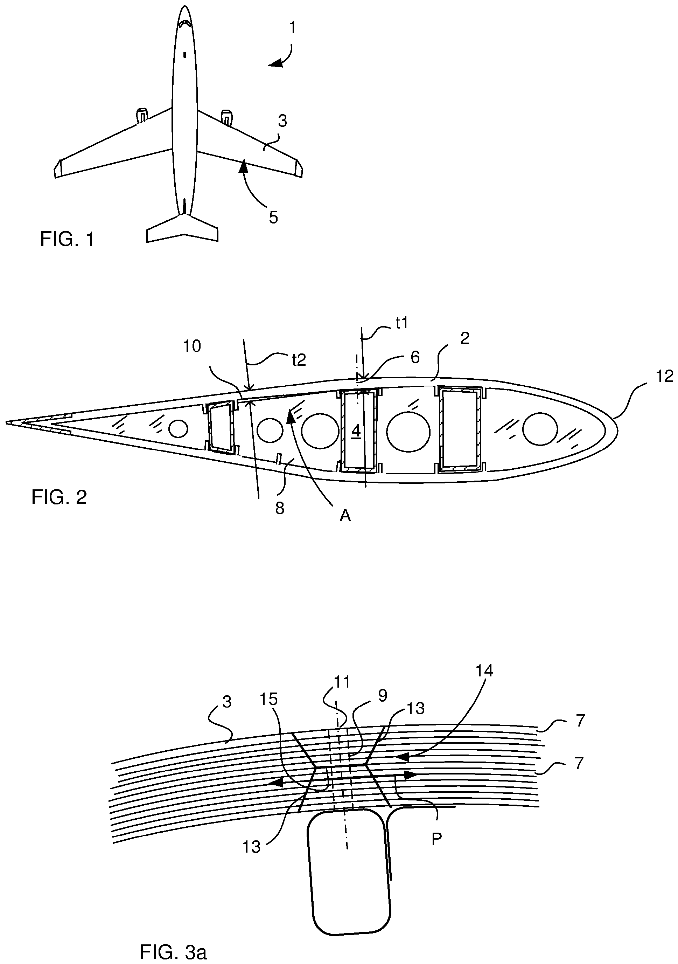

Fig. 1 schematically illustrates an aircraft 1 comprising a wing skin 3 of composite material. The wing skin 3 includes skin sections 5, which being attached to a sub-structure (spar caps and rib feet, etc., not shown) of the aircraft 1 by means of bolts (not shown).

Fig. 2 schematically illustrates a cross section of an airfoil according to prior art. A prior art skin 2 is attached to beams 4 by means of rivets 6. Ribs 8 extend chord wise within the airfoil. The skin 2 is made thicker within areas of the skin being attached to one of the main beams 6. The thickness t1 of the skin 2 is thicker than the thickness t2. For achieving a smooth aerodynamic contour of the skin 2 and providing a smooth aerodynamic surface of the outer side of the skin 2, a spacer 10 is positioned between the rib 8 and skin 2 at position A. This means extra manufacturer efforts and costs. Also would such a design involve unnecessary high weight of the skin 2 and sub-structures (spacer 10). Leading edge skins 12 are often bond to the wing-box skin by means of bolts. In case of bird impact, the leading edge skin 12 is replaced.

Fig. 3a schematically illustrates a closer view of a cross-section of a composite laminate skin 3 according to a first embodiment. The skin 3 comprises a plurality of fiber reinforcement plastic plies 7 stacked onto each other and is comprised of a plurality of fastening apertures 9. Each aperture 9 extends entirely through the laminate skin 3 in a direction orthogonally to the plane P of the skin 3. Each fastening aperture 9 is adapted for encompassing a respective fastening element 11, such as a bolt. The fastening aperture 9 extends through two aperture edge reinforcement inserts 13 of stainless steel forming an hour glass shaped interface between plastic and metal. Each insert 13 is thicker than the thickness of the fiber reinforced plastic ply 7 into which the insert 13 is inserted so that the insert 13 extends through more than two plies 7. A base contact surface 15 of the upper insert 13 is parallel with a top contact surface of the lower insert 13. The surfaces are bonded together by means of an adhesive paste. The adhesive paste is also applied around the circumference of the insert and bonds the respective ply with the insert 13.

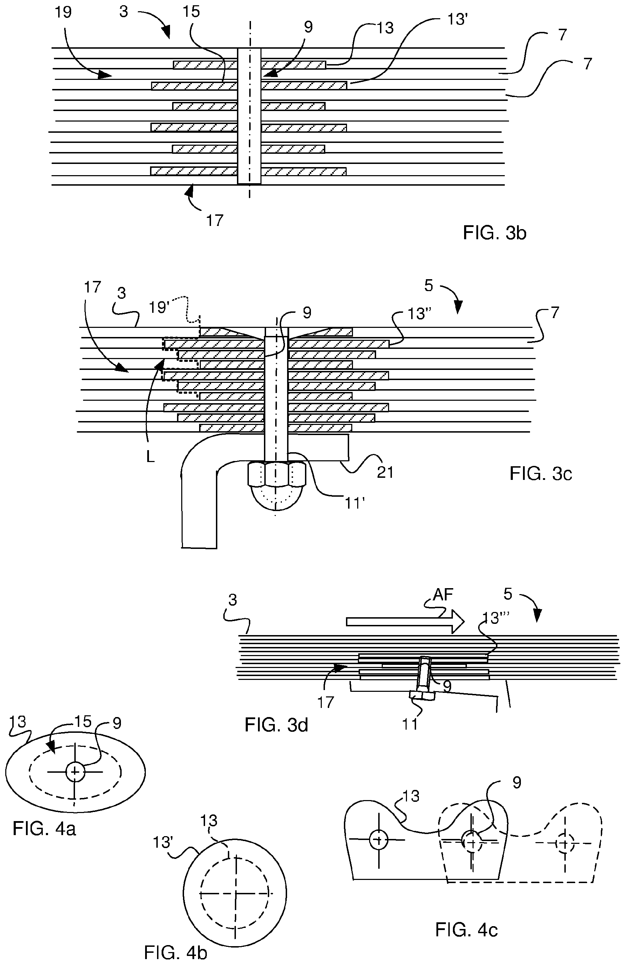

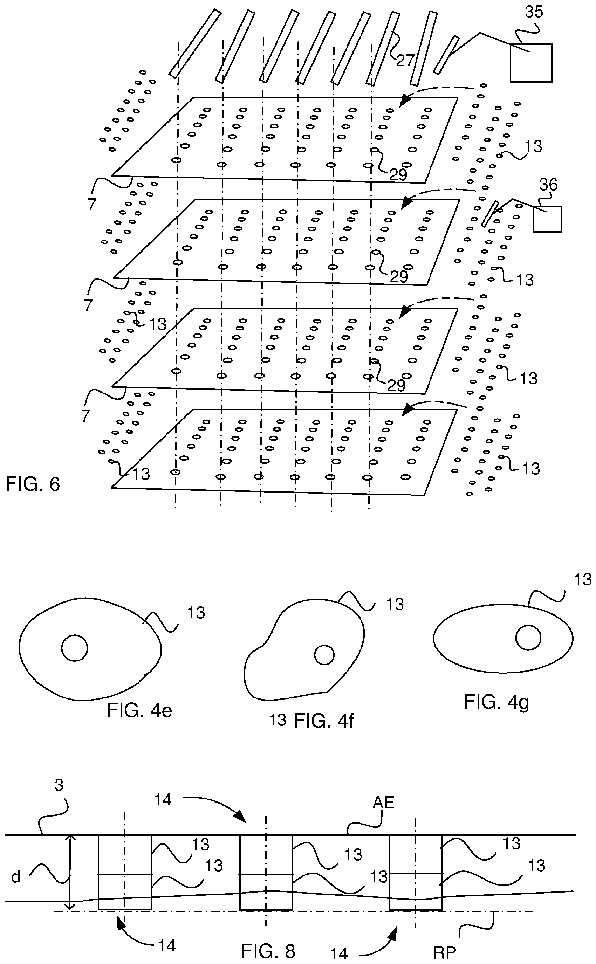

Fig. 3b schematically illustrates a cross-section of a wing skin section 3 according to a second embodiment. In this embodiment every second aperture edge reinforcement metal insert 13 of the stack 17, strengthening the reinforced fastening aperture 9, exhibits a smaller extension than the extension of intermediate inserts 13' positioned between said every second insert 13. The inserts 13, 13' are sandwiched between fiber reinforcement plastic plies 7. By arranging the inserts 13, 13' in this way a toothed interface 19 is achieved. Every second ply 7 is arranged between two inserts 13, 13' facing each other. The aperture edge reinforcement metal inserts 13, 13' do not exhibit any sharp corners, but exhibit a curved periphery (seen in a direction towards the insert 13, 13' contact surfaces 15). See also Fig. 4a illustrating such insert 13 from above. Fig. 4d shows that the metal insert 13 does not exhibit any sharp corners even viewed from the side. The Fig. 3b is more or less schematic illustrating the positions of the inserts 13, 13'. The thickness of each insert 13, 13' is about 0, 1 mm and the thickness of the laminate skin 3 is about 3, 28 mm.

Fig. 3c schematically illustrates a cross-section of a wing skin section 5 according to a third embodiment. In this embodiment the fastening aperture 9 extends through a pre-determined number of aperture edge reinforcement metal inserts 13", which number corresponds with the number of fiber reinforcement plastic plies 7 stacked onto each other. Each insert 13" exhibits an extension in plane so that they form a serrated interface 19', wherein the interface 19' defines an interaction line L between the stack of plies 7 and the stack 17 of inserts 13". In Fig. 3c is also shown a portion of a rib foot 21 holding the skin 3 in position. A bolt 11' extends through the laminate skin 3. The inserts 13" are made of steel. A non-corrosive adhesive sealant is applied on the surfaces of the inserts 13".

Fig. 3d schematically illustrates a cross-section of a wing skin section 5 according to a fourth embodiment. In this embodiment the laminate skin 3 comprises a plurality of fastening apertures 9 extending partly through the laminate skin 3 in a direction 85 degrees (nearly orthogonally) to the plane of the laminate skin 3. Each fastening aperture 9 is adapted for encompassing a respective fastening element 11. The stack 17 of inserts 13" is not exposed in the aerodynamic surface of the skin 3 and airflow AF which promotes laminar airflow. The inserts are bond to each other and to the plies by means of epoxy based films.

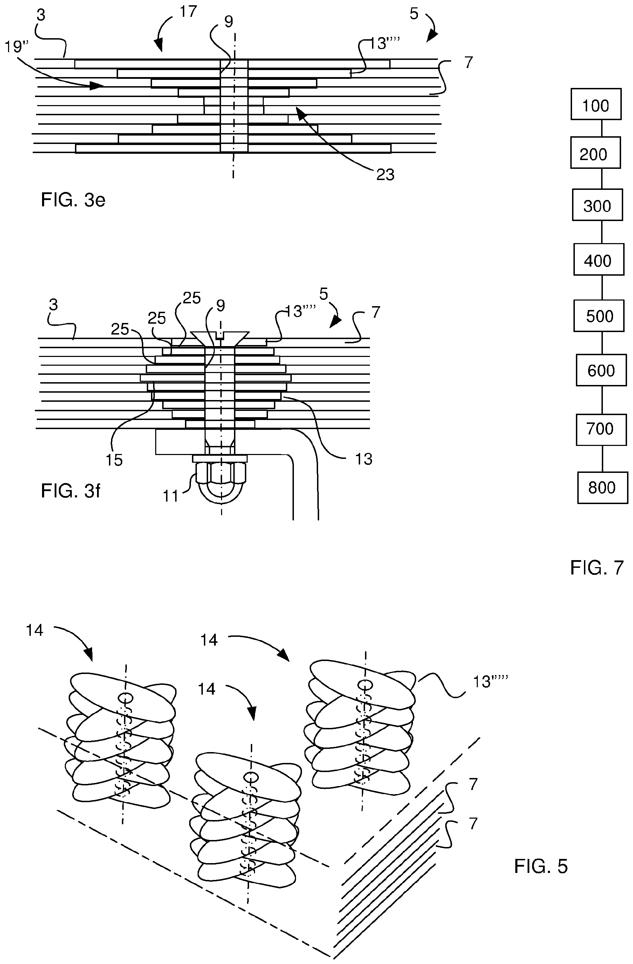

Fig. 3e schematically illustrates a cross-section of a fuselage skin section 5 according to a fifth embodiment. The fastening aperture 9 extends through a pre-determined number of aperture edge reinforcement metal inserts 13"". Each insert 13"" exhibits such an extension in plane that the inserts 13"" together form a stepped interface 19" defining the interface between the stack of plies 7 and the stack of inserts 13"". In such way is achieved anchorage of the stack 17 of inserts 13"" within the laminate skin 3. The fiber reinforced plastic plies 7 protrude into spaces 23 between the opposing inserts 13"" and increase the strength of the bond between the plies 7 and the stack 17 of inserts 13"".

Fig. 3f schematically illustrates a cross-section of a skin section 5 according to a sixth embodiment. The inserts 13"" are of the same dimension. This promotes effective manufacture and time saving production. The aperture edge reinforced metal insert 13"" is thinner than the thickness of the fiber reinforced plastic ply 7 into which the insert 15 is inserted. Thereby is provided that an adhesive film 25 can be added to one of the contact surfaces 15 of the insert 13"". This promotes high strength of the aperture 9 without the need of making the laminate skin 3 thicker within an area of the skin 3 surrounding the aperture 9.

Figs. 4a to 4g schematically illustrate different shapes and contours of inserts. Fig. 4b embodiment exhibits no pilot bore and the aperture is made after co-curing of the laminate comprising the inserts.

Fig. 5 schematically illustrates in a perspective view a seventh embodiment, wherein inserts 13'''" of same dimension are stacked onto each other. By arranging the oval inserts 13""' diagonal to each other, a toothed interface between the plastic plies and the stainless steel inserts is achieved. The design (shape and composition) and orientation of each insert are adapted to the anisotropy of the composite plies. The shapes and orientations of the inserts of each stack are thus adapted to a specific rated load or stress acting on the laminate area surrounding the aperture and on the plies.

Fig. 6 schematically illustrates a view in perspective of semi-cured resin impregnated fiber plies (pre-pregs) 7. Ribs 27 (sub-structure) are shown schematically. The laminate skin to be produced comprises twenty five plies 7, but only four are shown. The uppermost ply 7 is in contact with the ribs 27. The next ply 7 below the uppermost ply 7 comprises recesses 29 into which metal predrilled (pilot bore) inserts 13 are inserted. The inserts are punched from a thin plate of rolled stainless steel by means of a robot apparatus 36. Such stainless steel alloy will take up high yield stress. The thickness of each plate is 0,10 mm and the pre-preg ply is 0,131 mm. After compression and curing the stack of plies will adapt a more compact design (the laminate could vary in thickness), but the stacks of inserts 13 will always have the same thickness. This promotes that a fastening to the substructure always will mean that proper dimensions are transferred from a reference plane (se Fig. 8) to the aerodynamic surface for optimal air flow reducing aircraft fuel consumption. All plies 7 are stacked onto each other. Each ply 7 comprises recesses 29 into which the inserts 13 are inserted.

The method for producing the composite laminate skin is performed as follow and the steps illustrated schematically in Fig. 7.

The method is provided for producing a composite laminate skin 3 (see for example Figs. 3e, 3f etc.) comprising a plurality of fiber reinforcement plastic plies 7 stacked onto each other. Fastening apertures 9 (see e.g. Figs. 3e, 3f etc.) extend entirely or partly through the laminate skin 3 normal or essentially normal to a plane P (see for example Fig. 3a or 3d) of the laminate skin 3. Each fastening aperture 9 extends through the metal insert 13. The steps are provided with reference to Fig. 7:
100: Providing uncured or semi-cured fiber reinforcement plastic plies 7;
200: Providing a plurality of metal inserts 13;
300: Providing the plies 7with a plurality of recesses, each having a periphery greater than the periphery of a mating insert 13;
400: Applying inserts 13 into the recesses;
500: Applying the plies 7 onto each other providing a lay-up;
600: Curing the lay-up in a curing tool;
700: Removing the finished laminate skin 3 from the curing tool; and
800: Machining the laminate skin 3 providing said fastening apertures 9.

The step of providing the plies 7 with a plurality of recesses 29 is made by cutting by means of a robot apparatus 35. Also punching the inserts 13 from a metal sheet (not shown) is made automatically and the placement of the inserts 13 into the recesses 29 of the plies is made by a robot means 36. The lay-up is provided with a vacuum bag and vacuum (suction pressure) is applied and the lay-up is further moved to an autoclave for curing.

Thereby is achieved a method which efficiently can be used in the production of aircraft airfoil composite laminate skins comprising a plurality of fastening apertures each comprising a reinforced aperture edge portion surrounding the respective fastening aperture.

Fig. 8 schematically illustrates a cross-section of a laminate skin 3 comprising pairs of divided inserts 13. The stacks 14 of inserts 13 promote the same dimension d defined from aerodynamic surface AE to a reference plane RP. In such way is achieved an efficient way to eliminate eventual shims between skin and substructure, still providing a smooth aerodynamic surface without any buckles.

The present invention is of course not in any way restricted to the preferred embodiments described above, but many possibilities to modifications, or combinations of the described embodiments, thereof should be apparent to a person with ordinary skill in the art without departing from the basic idea of the invention as defined in the appended claims. The inserts are preferably flat and made of stainless steel, but other shapes and materials can be used. The thickness of the insert can be within the range of 0, 05-0, 15 mm or other ranges. The wideness of the insert can be 10-50 mm or of other dimensions. The thickness of the insert could also be larger, such as up to 10 mm or larger. The wideness of the insert could also be 100 mm for specific applications.

Of course, it is also possible that adjacent and face to face arranged inserts are bond together via their respective contact surface facing each other. There can be arranged one or several ply portions between two inserts facing each other. The ply portions are defined as areas surrounding the aperture and forming the aperture. The laminate skin may comprise twenty fiber reinforced plastic plies (or less) and up to fifty plies. Of course, the laminate skin could comprise more than fifty plies. It could comprise up to one hundred or even up to five hundred plies. The stack and laminate skin can of course be of various thicknesses depending upon application. The stack can be formed by only one insert. Alternatively, the insert is designed as a relative thick "puck" extending transverse through several plies, the "puck" having at least one fastening aperture. The "puck" can be embedded in the laminate and serves as a reinforcement displacing the stress from the aperture bore edge to the periphery (envelope surface) of the "puck" merging witht the laminate plies. The "puck" preferably comprises a composite material compring a plastic embedded with reinforcing fiber material (e.g. carbon fibers, carbon nano tubes etc). The reinforcing fiber material may have different orientations in different positions of the "puck" for matching the strength properties of the surrounding laminate. The "puck" may have protrusions comprising the reinforcing material for engaging the laminate plies. The word "insert" can be replaced by the word "patch" or "enclosure", "disc" or "plate" or the words "embedded washer", "divided reinforcement bodies" etc.

## Claims

1. A composite laminate skin comprising a plurality of fiber reinforced plastic plies (7) stacked onto each other, the laminate skin (3) comprises a plurality of fastening apertures (9), each of which extending entirely or partly through the laminate skin (3) in a direction essentially orthogonally or orthogonally to the plane (P) of the laminate skin (3), each fastening aperture (9) being adapted for encompassing a respective fastening element (11), **characterized in that** the fastening aperture (9) extends through a tailored stack (14, 17) of at least two inserts (13, 13', 13", 13"', 13"", 13'""), wherein the stack is tailored with a specific shape, the two inserts together exhibit and serve as a massive metal collar capable to take up large axial clamp forces, wherein the plies (7) are provided with a plurality of recesses (29) into which the inserts (13) are applied and **in that** adjacent inserts (13) and face to face arranged inserts (13) are bond together via a respective contact surface of the inserts (13) facing each other.

2. The laminate skin according to claim 1, **wherein** the inserts (13) comprise metal.

3. The laminate skin according to claim 1 or 2, **wherein** the inserts (13) comprise stain-less steel.

4. The laminate skin according to any of claims 1 to 3, **wherein** the fastening aperture (9) extends through a pre-determined number of inserts (13), which number corresponds with the number of fiber reinforced plastic plies (7) stacked onto each other.

5. The laminate skin according to any of the preceding claims, **wherein** the fastening aperture (9) extends through a pre-determined number of inserts (13, 13'), each of which exhibits an extension in said plane (P) so that the peripheral edges of the inserts (13, 13') form a serrated interface (19), defining an engaging zone between the stack of plies (7) and the stack of inserts (13, 13'), wherein fiber reinforced plastic plies protrude into steps and/or onto inclining contact surfaces of the stack, thus increasing the strength of the aperture edges.

6. The laminate skin according to any of claims 1-4, **wherein** the fastening aperture (9) extends through a pre-determined number of inserts (13), each of which exhibits an extension in said plane (P) so that peripheral edges of the inserts (13) together form a stepped interface (19'), defining an engaging zone between the stack of plies (7) and the stack of inserts (13), wherein fiber reinforced plastic plies protrude into steps and/or onto inclining contact surfaces of the stack, thus increasing the strength of the aperture edges.

7. The laminate skin according to any of the preceding claims, **wherein** the insert (13) is thinner than the thickness of the fiber reinforced plastic ply (7) into which the insert (13) is inserted.

8. The laminate skin according to any of the preceding claims, **wherein** the insert (13) does not exhibit any sharp corners but exhibits a curved periphery.

9. A method for producing a composite laminate skin (3) comprising a plurality of fiber reinforced plastic plies (7) stacked onto each other, fastening apertures (9) extend entirely or partly through the laminate skin (3) normal or essentially normal to the plane (P) of the laminate skin (3), each fastening aperture (9) extends through a tailored stack (14) of at least two inserts (13)), wherein the stack is tailored with a specific shape, the two inserts together exhibit and serve as a massive metal collar capable to take up large axial clamp forces, wherein adjacent inserts and face to face arranged inserts (13) are bond together via a respective contact surface of the inserts (13) facing each other, the method comprises the steps of:
- providing uncured or semi-cured fiber reinforced plastic plies (7);
- providing a plurality of inserts (13, 13', 13", 13'", 13"", 13'"");
- providing the plies (7) with a plurality of recesses, each having a periphery greater than the periphery of a mating insert (13, 13', 13", 13"', 13"", 13'"");
- applying the inserts (13, 13', 13", 13"', 13"", 13'"") into the recesses;
- applying the plies (7) onto each other providing a lay-up;
- curing the lay-up in a curing tool;
- removing the finished laminate skin (3) from the curing tool;
- machining the laminate skin (3) providing said fastening apertures (9).

10. The method according to claim 9, **wherein** the step of applying inserts into the recesses is performed by means of a robot (36).

11. The method according to claim 9 or 10, **wherein** the inserts (13) comprise metal.

12. The method according to claim 9 or 10, **wherein** the inserts (13) comprise stain-less steel.

13. The method according to any of claims 9 to 12, **wherein** the step of providing the ply (7) comprising a plurality of recesses (29) is followed by insertion of the inserts (13) into the recesses (29) before a second ply is applied onto said ply (7).

14. The method according to any of claims 9 to 12, **wherein** the step of applying the plies (7) onto each other is repeated n times, wherein n being the number of plies stacked onto each other for providing the composite laminate skin (3).

## Patentansprüche

1. Verbundwerkstofflaminathaut umfassend eine Vielzahl von aufeinandergestapelten faserverstärkten Kunststofflagen (7), wobei die Laminathaut (3) eine Vielzahl von Befestigungsöffnungen (9) umfasst, von denen sich jede ganz oder teilweise durch die Laminathaut (3) in einer zur Ebene (P) der Laminathaut (3) im Wesentlichen orthogonalen oder orthogonalen Richtung erstreckt, wobei jede Befestigungsöffnung (9) angepasst ist, um eine jeweiliges Befestigungselement (11) zu umgeben, **dadurch gekennzeichnet, dass** die Befestigungsöffnung (9) sich durch einen zugeschnittenen Stapel (14, 17) aus wenigstens zwei Einsätzen (13, 13', 13", 13"', 13"", 13""') erstreckt, wobei der Stapel mit einer spezifischen Form zugeschnitten ist, wobei die beiden Einsätze zusammen einen massiven Metallkragen aufweisen bzw. als ein massiver Metallkragen dienen, der zur Aufnahme großer axialer Klemmkräfte fähig ist, wobei die Lagen (7) mit einer Vielzahl von Aussparungen (29) versehen sind, in welche die Einsätze (13) eingebracht sind, und **dass** angrenzende Einsätze (13) und einander gegenüberliegend angeordnete Einsätze (13) über eine jeweilige Kontaktfläche der einander zugewandten Einsätzen (13) zusammengebunden sind.

2. Laminathaut nach Anspruch 1, **wobei** die Einsätze (13) Metall umfassen.

3. Laminathaut nach Anspruch 1 oder 2, **wobei** die Einsätze (13) rostfreien Stahl umfassen.

4. Laminathaut nach einem der Ansprüche 1 bis 3, **wobei** die Befestigungsöffnung (9) sich durch eine vorgegebene Anzahl von Einsätzen (13) erstreckt, welche Anzahl der Anzahl von aufeinandergestapelten faserverstärkten Kunststofflagen (7) entspricht.

5. Laminathaut nach einem der vorgehenden Ansprüche, **wobei** die Befestigungsöffnung (9) sich durch eine vorgegebene Anzahl von Einsätzen (13, 13') erstreckt, von denen jeder eine Verlängerung in der Ebene (P) aufweist, so dass die peripheren Kanten der Einsätze (13, 13') eine geriffelte Grenzfläche (19) bilden, welche einen Eingriffsbereich zwischen dem Stapel von Lagen (7) und dem Stapel von Einsätzen (13, 13') definiert, wobei faserverstärkte Kunststofflagen in Stufen und/oder auf neigende Kontaktflächen des Stapels ragen, wodurch sich die Stärke der Öffnungskanten erhöht.

6. Laminathaut nach einem der Ansprüche 1 bis 4, **wobei** die Befestigungsöffnung (9) sich durch eine vorgegebene Anzahl von Einsätzen (13) erstreckt, von denen jeder eine Verlängerung in der Ebene (P) aufweist, so dass die peripheren Kanten der Einsätze (13, 13') zusammen eine gestufte Grenzfläche (19') bilden, welche einen Eingriffsbereich zwischen dem Stapel von Lagen (7) und dem Stapel von Einsätzen (13) definiert, wobei faserverstärkte Kunststofflagen in Stufen und/oder auf neigende Kontaktflächen des Stapels ragen, wodurch sich die Stärke der Öffnungskanten erhöht.

7. Laminathaut nach einem der vorgehenden Ansprüche, **wobei** der Einsatz (13) dünner als die Dicke der faserverstärkten Kunststofflage (7) ist, in welche der Einsatz (13) eingesetzt ist.

8. Laminathaut nach einem der vorgehenden Ansprüche, **wobei** der Einsatz (13) keine scharfen Ecken aufweist, sondern eine gekrümmte Peripherie aufweist.

9. Verfahren zur Herstellung einer Verbundwerkstofflaminathaut (3) umfassend eine Vielzahl von aufeinandergestapelten faserverstärkten Kunststofflagen (7), wobei Befestigungsöffnungen (9) sich ganz oder teilweise durch die Laminathaut (3) normal oder im Wesentlichen normal zur Ebene (P) der Laminathaut (3) erstrecken, wobei jede Befestigungsöffnung (9) sich durch einen zugeschnittenen Stapel (14) aus wenigstens zwei Einsätzen (13) erstreckt, wobei jeder Stapel mit einer spezifischen Form zugeschnitten ist, wobei die beiden Einsätze zusammen einen massiven Metallkragen aufweisen bzw. als ein massiver Metallkragen dienen, der zur Aufnahme großer axialer Klemmkräfte fähig ist, wobei angrenzende Einsätze und einander gegenüberliegend angeordnete Einsätze (13) über eine jeweilige Kontaktfläche der einander zugewandten Einsätze (13) zusammengebunden sind, welches Verfahren die folgenden Schritte umfasst:
- Vorsehen von ungehärteten oder halb-gehärteten faserverstärkten Kunststofflagen (7);
- Vorsehen einer Vielzahl von Einsätzen (13, 13', 13", 13"', 13"", 13'"");
- Versehen der Lagen (7) mit einer Vielzahl von Aussparungen, wobei jede eine Peripherie aufweist, die größer als die Peripherie eines zusammenpassenden Einsatzes (13, 13', 13", 13"', 13"", 13""') ist;
- Einbringen der Einsätze (13, 13', 13", 13"', 13"", 13""') in die Aussparungen;
- Anbringen der Lagen (7) aufeinander, wodurch ein Auflegen gewährleistet wird;
- Härten des Auflegens in einem Härtewerkzeug;
- Entfernen der fertigen Laminathaut (3) vom Härtewerkzeug;
- Bearbeiten der Laminathaut (3), wodurch Befestigungsöffnungen (9) bereitgestellt werden.

10. Verfahren nach Anspruch 9, **wobei** der Schritt des Einbringens von Einsätzen in
die Aussparungen mittels eines Roboters (36) durchgeführt wird.

11. Verfahren nach Anspruch 9 oder 10, **wobei** die Einsätze (13) Metall umfassen.

12. Verfahren nach Anspruch 9 oder 10, **wobei** die Einsätze (13) rostfreien Stahl umfassen.

13. Verfahren nach einem der Ansprüche 9 bis 12, **wobei** der Schritt des Bereitstellens der Lage (7), die eine Vielzahl von Aussparungen (29) umfasst, vom Einsetzen der Einsätze (13) in die Aussparungen (29) vor dem Anbringen einer zweiten Lage auf der Lage (7) gefolgt wird.

14. Verfahren nach einem der Ansprüche 9 bis 12, **wobei** der Schritt des Anbringens der Lagen (7) aufeinander n-mal wiederholt wird, wobei n die Anzahl von aufeinandergestapelten Lagen zum Bereitstellen der Verbundwerkstofflaminathaut (3) ist.

## Revendications

1. Revêtement stratifié composite comprenant une pluralité de couches de matière plastique renforcée par des fibres (7) empilées les unes sur les autres, le revêtement stratifié (3) comprenant une pluralité d'ouvertures de fixation (9), dont chacune s'étendant entièrement ou partiellement à travers le revêtement stratifié (3) dans une direction essentiellement orthogonale ou orthogonale au plan (P) du revêtement stratifié (3), chaque ouverture de fixation (9) étant adaptée pour englober un élément de fixation respectif (11), **caractérisé en ce que** l'ouverture de fixation (9) s'étend à travers un empilement taillé (14, 17) d'au moins deux inserts (13, 13', 13", 13"', 13"", 13""'), dans lequel l'empilement est taillé avec une forme spécifique, les deux inserts ensemble présentent et servent d'un collier en métal massif capable d'accommoder des forces de pince axiales, dans lequel les couches (7) sont pourvues d'une pluralité d'évidements (29) dans lesquels les inserts (13) sont appliqués, et **en ce que** des inserts (13) adjacents et des inserts (13) arrangés face à face sont liés les uns aux autres via une surface de contact respective des inserts (13) l'un en face de l'autre.

2. Revêtement stratifié selon la revendication 1, **dans** lequel les inserts (13) comprennent le métal.

3. Revêtement stratifié selon la revendication 1 ou 2, **dans** lequel les inserts (13) comprennent l'acier inoxydable.

4. Revêtement stratifié selon l'une quelconque des revendications 1 à 3, **dans le**quel l'ouverture de fixation (9) s'étend à travers un nombre prédéterminé d'inserts (13), ce nombre correspondant au nombre de couches de matière plastique renforcée par des fibres (7) empilées l'une sur l'autre.

5. Revêtement stratifié selon l'une quelconque des revendications précédentes, **dans** lequel l'ouverture de fixation (9) s'étend à travers un nombre prédéterminé d'inserts (13, 13'), chacun d'entre eux présentant une extension dans ledit plan (P) si bien que les bords périphériques des inserts (13, 13') forment une interface dentelée (19) définissant une zone d'engagement entre l'empilement de couches (7) et l'empilement d'inserts (13, 13'), dans lequel les couches de matière plastique renforcée par des fibres font saillie dans les pas et / ou sur des surfaces de contact inclinées de l'empilement, ainsi augmentant la résistance des bords d'orifice.

6. Revêtement stratifié selon l'une quelconque des revendications 1 à 4, **dans le**quel l'ouverture de fixation (9) s'étend à travers un nombre prédéterminé d'inserts (13), chacun d'entre eux présentant une extension dans ledit plan (P) si bien que les bords périphériques des inserts (13) ensemble forment une interface en gradins (19') définissant une zone d'engagement entre l'empilement de couches (7) et l'empilement d'inserts (13), dans lequel les couches de matière plastique renforcée par des fibres font saillie dans les pas et / ou sur des surfaces de contact inclinées de l'empilement, ainsi augmentant la résistance des bords d'orifice.

7. Revêtement stratifié selon l'une quelconque des revendications précédentes, **dans** lequel l'insert (13) est plus mince que l'épaisseur de la couche de matière plastique renforcée par des fibres (7) dans laquelle l'insert (13) est inséré.

8. Revêtement stratifié selon l'une quelconque des revendications précédentes, **dans lequel** l'insert (13) ne présente aucun coin pointu mais présente une périphérie incurvée.

9. Procédé de fabrication d'un revêtement stratifié composite (3) comprenant une pluralité de couches de matière plastique renforcée par des fibres (7) empilées les unes sur les autres, des ouvertures de fixation (9) s'étendant entièrement ou partiellement à travers le revêtement stratifié (3) normale ou essentiellement normale au plan (P) du revêtement stratifié (3), chaque ouverture de fixation (9) s'étendant à travers un empilement taillé (14) d'au moins deux inserts (13)), l'empilement étant taillé avec une forme spécifique, les deux inserts ensemble présentant et servant d'un collier en métal massif capable d'accommoder des forces de pince axiales, des inserts adjacents et des inserts arrangés face à face (13) étant liés les uns aux autres via une surface de contact respective des inserts (13) l'un en face de l'autre, le procédé comprenant les étapes consistant à :
- fournir des couches de matière plastique renforcée par des fibres non durcies ou semi-durcies (7) ;
- fournir une pluralité d'inserts (13, 13', 13", 13"', 13"", 13""') ;
- fournir des couches (7) avec une pluralité d'évidements, chacun ayant une périphérie supérieure à la périphérie d'un insert d'appariement (13, 13', 13", 13"', 13"", 13""') ;
- appliquer les inserts (13, 13', 13", 13'", 13"", 13""') dans les évidements ;
- appliquer les couches (7) l'une sur l'autre en fournissant une superposition de couches ;
- cuire la superposition de couches dans un outil de durcissement ;
- retirer le revêtement stratifié fini (3) de l'outil de durcissement ;
- usiner le revêtement stratifié (3) fournissant lesdites ouvertures de fixation (9).

10. Procédé selon la revendication 9, **dans lequel** l'étape d'application des inserts dans les évidements est réalisée au moyen d'un robot (36).

11. Procédé selon la revendication 9 ou 10, **dans lequel** les inserts (13) comprennent le métal.

12. Procédé selon la revendication 9 ou 10, **dans lequel** les inserts (13) comprennent l'acier inoxydable.

13. Procédé selon l'une quelconque des revendications 9 à 12, **dans lequel** l'étape de fourniture de la couche (7) comprenant une pluralité d'évidements (29) est suivie de l'insertion des inserts (13) dans les évidements (29) avant qu'une deuxième couche ne soit appliqué sur ladite couche (7).

14. Procédé selon l'une quelconque des revendications 9 à 12, **dans lequel** l'étape d'application des couches (7) l'une sur l'autre est répétée n fois, n étant le nombre de couches empilées l'une sur l'autre pour former le revêtement stratifié composite (3).
